# EUROPEAN PATENT SPECIFICATION

(11) **EP 3 079 493 B1**
(45) Date of publication and mention of the grant of the patent: **08.04.2020**
(21) Application number: 14805278.0
(22) Date of filing: 28.11.2014
(51) Int. Cl.: A23G 9/48, A23G 9/24, A23G 9/26

(54) **FROZEN CONFECTIONERY PRODUCT WITH AN EASY PEELABLE GEL COATING AND A METHOD FOR MANUFACTURING SAME**
GEFRORENE SÜSSWARE MIT EINEM ABZIEHBAREN GELÜBERZUG UND VERFAHREN ZUR HERSTELLUNG DAVON
PRODUIT DE CONFISERIE CONGELÉ AVEC ENROBAGE DE GEL POUVANT ÊTRE FACILEMENT PELÉ, ET SON PROCÉDÉ DE FABRICATION

(30) Priority: 10.12.2013 WO PCT/CN2013/088985
(43) Date of publication of application: 19.10.2016
(73) Proprietor: Société des Produits Nestlé S.A., 1800 Vevey (CH)
(72) Inventor: ZHOU, Yin, Changsha City Hunan (CN); JIRARUANGKIAT, Sirichit, Bangkok 10900 (TH); LEAW, Kit Yee, 31450 Ipoh Perak (MY)
(74) Representative: Elleby, Gudrun
(86) International application number: PCT/EP2014/075974
(87) International publication number: WO 2015/086345

(56) References cited:
- EP-A1- 2 586 316
- WO-A1-01/30175
- WO-A1-2013/007493
- WO-A2-2012/156538
- WO-A2-2012/156539
- US-A- 3 752 678
- US-A- 4 427 704
- ANONYMOUS: "Nestlé's first peelable ice cream rolls out worldwide", INTERNET CITATION, 16 February 2011 (2011-02-16), pages 1-2, XP002668463, Retrieved from the Internet: URL:http://www.nestle.com/Media/NewsAndFea tures/Pages/Nestles-first-peelable-ice-cre am-roll-out-worldwide.aspx [retrieved on 2012-01-31]

## Description

### Field of the invention

The present invention relates to a frozen confectionery product with a peelable gel coating and to a method for manufacturing the same.

### Background

Frozen confectionery products consisting entirely of frozen gel or comprising a frozen gel coating are known and are popular in particular with children.

One example is a frozen confectionery product comprising a core consisting of a frozen confection said core being at least partially coated with a frozen flexible edible gel coating or layer. Such a frozen confectionery product is sold by Nestlé Thailand under the brand name "Eskimo Monkey". This product comprises an ice-cream core being coated with a frozen flexible edible gel layer. This gel layer can be peeled off by the consumer and eaten separately. Since the gel is resistant to liquefaction, even in the defrosted state, the product parts that have been peeled off by the consumer remain intact without melting and dripping. To facilitate the peeling, four longitudinal cutting lines are provided in the gel layer, so that four flaps of peel can be peeled off. One thereby achieves a banana-style peeling effect.

As it becomes clear from the above, an important feature of the gel used to form the peelable gel layer is that it resists to meltdown even after complete defrosting. This is achieved by the addition of stabilisers such as locust bean gum, kappa-carrageenan, sodium alginate or pectin to the mix. EP 1339290 A2 describes such a jelly or gel and its use in a composite frozen confectionery product. The content of this document is incorporated herein by reference.

WO2013064376 discloses a product with a core of ice cream which is coated with at least two visually distinct layers of jelly. The patent mentions that when the two gel layers are frozen in two separate steps, they show little adhesion between each other, so that they can be peeled off separately by a consumer. However, due to the very close characteristic, both jelly shell and core, or the different layers of jelly, can be found to adhere to each other and may be difficult to peel apart from each other during consumption in particular for children who enjoy these kinds of composite frozen confectionery products. For example, thinner layers of coating may be more difficult to peel off.

WO2013007493 describes a frozen confectionery product which comprises a core of a frozen confection, which is at least partially coated with a gel, where the core of frozen confection comprises an ice structuring protein in order to improve peelability of the gel layer and avoid adhesion to the core when peeling. This document does not describe a solution to improve peelability of a gel layer in a product with a core of gel, nor in a product with at least two layers of gel.

US3752678 discloses a frozen food which is coated with an aqueous thixotropic gel based on a water soluble polysaccharide. The coating is meant to stick on the ice cream to protect it.

WO2012/156539 discloses a frozen confectionery product comprising a core consisting of a frozen confection, wherein the core is coated with a frozen flexible edible gel layer, characterized in that the gel layer is provided with at least one cutting line extending spirally over the gel layer, said cutting line allowing to peel-off the gel-layer in a spiral.

WO2012/156538 discloses a cutting or embossing tool for frozen confectionery products comprising at least two elements, each element comprising a void with an inner contour corresponding to the outer contour of the product to be cut or embossed. At least one of the elements comprises at least one knife or embosser with a blade or an embossing surface extending along the inner contour of the void. The tool can be used to cut lines or a line pattern shape into the surface of a frozen confectionery product.

WO01/30175 discloses an ice confection coating of an aqueous based sol containing a pectin and a setting agent in an amount sufficient to cause gelation of the sol.

US4427704 discloses a food product thickened or gelled with carrageenan and glucomannan .

There is therefore a need to improve on the peelability of the gel coatings in particular for composite products with multiple gel layers.

### Object of the invention

It is thus the object of the present invention is to provide a frozen confectionery product with multiple gel layers with an improved peelablility.

### Summary of the invention

The present invention is defined by the claims.

It was surprisingly found that the peelability of the gel coating from the frozen confection core or from other gel coatings can be improved having thin layer of frozen liquid on the surface of the gel coating(s).

Accordingly, the present invention relates to a frozen confectionery product comprising a core of a frozen confection, which is at least partially coated with a gel coating, characterized in that the gel coating has a layer of frozen liquid on the surface of the gel coating that originates from syneresis of the gel, and wherein the gel coating has a total solid content from 20 to 45% based on weight of the gel (wt) and comprises 0.2 to 2% wt of a gelling agent and konjac, in an amount of from 0.1 to 1.0 %wt. and wherein the at least one gel layer comprises konjac and carrageenan in a ratio which is in the range from 3:7 to 7:3, and wherein the gel coating or gel coatings has/have a thickness of between 2 and 5 mm, and wherein the frozen confection product comprises one or more additional gel coating(s) on top of or beneath the gel coating, which addtional gel coating at least partly overlaps the other gel coating.

Without wishing to be bound by theory it is believed that the frozen liquid on the surface of the gel coating provides a separation between the gel coating and the core of the frozen confection or between the gel coating and a second gel layer. This means that the gel coating does not adhere to the abutting surface of the core or the second gel coating and the parts of the frozen confection can be easily separated when peeling the coating(s) off.

In a second aspect the invention relates to a method for manufacturing a frozen confectionery product, having the composition and structure presented above, comprising the following steps:
- filling a first jelly mix into a mould, freezing the jelly mix so that it forms a first frozen gel coating in the mould and sucking off the unfrozen jelly mix,
- filling a second jelly mix into a mould, freezing the jelly mix so that it forms a second frozen gel coating in the mould and sucking off the unfrozen jelly mix,
thereby obtaining a shell consisting of two frozen gel coatings
- filling a third mix forming the core consisting of a frozen confection into said shell,
- freezing and demoulding the product,
   - wherein at least one of the the gel coating has a layer of frozen liquid on the surface of the gel coating that originates from syneresis of the gel.

### Brief description of the figure

Fig. 1 (a) shows sample HT1 with gel coatings peeled off.
Fig. 1(b) shows sample HT2 with the outer standard gel coating peeled off.
Fig. 1(c) shows sample HT2 with both the inner and the outer gel coating peeled off.
Fig. 1(d) shows sample HT3 with the outer coating peeled off.
Fig. 2(a) and (b) show a detailed picture of sample HT2.
Fig. 3(a) and (b) show frozen confections (samples 1 and 2) with low solid content gel coatings.
Fig. 4 shows a) a peelable stick with an outer coating made from a standard gel coating and an inner core of water ice and b) a peelable stick with outer coating made from a konjac carrageenan gel coating and an inner core of water ice.

### Detailed description of the invention

It has been found that after freezing, a very thin layer of frozen liquid is formed on the surface of the gel coatings resulting from the syneresis of the gel.

Syneresis is happening in some gelling system. It is usually undesirable when forming a gel that the gel exhibit syneresis. The gel when formed tightens and squeezes out fluid like a sponge. The separation of liquid from the gel results in gel products that are standing in the liquid which gives an unappealing appearance and excessive syneresis may lead to non-continuous gel. Surprisingly according to this invention it has been found that gel which exhibit syneresis provides advantages. The frozen liquid serves as a barrier layer which prevents the gel coatings and/or core from sticking or adhering together. This allows a gel coating to be easily peeled from a core of frozen confection or from other gel coatings.

By syneresis is meant the extraction or expulsion or separation of a liquid from a gel. The liquid is substantially water but may include small amounts of solids from the gel composition. In a preferred embodiment the liquid comprises above 95% of water.

In the present context a gel coating may be a layer of gel which completely or partly covers a frozen confectionery core. It may have any form e.g. being a stripe or stripes or rods.

Further in the present context unless otherwise indicated % of a component means the % of weight based on the weight of the composition, i.e. weight/weight %.

In according with the present invention it has been found that the syneresis effect in gel frozen into multi-layered or coated products has a surprising effect of improved of peelability of the gel coatings.

According to the invention the gel coating has a total solid content from 20 to 45% based on weight of the gel (wt) and comprises 0.2 to 2 % wt of a gelling agent and konjac in an amount from 0.1 to 1.0%wt and the at least one gel layer comprises konjac and carrageenan in a ratio which is from 3:7 to 7:3. The solid content and the gelling agent provide a gel coating which is both flexible and resilient enough that it can be peeled off the frozen confection core or from other gel coatings without breakage.

The gel coating comprises konjac as a gelling agent, in an amount from 0.10 to 1.0 % wt. in combination with carrageenan in a ratio which is in the range from 3:7 to 7:3.

The gel coating composition of the present invention may further include one or more additional ingredients such as flavors, sweeteners, colorants, setting salts, acids, buffer salts or a combination thereof.

Sweeteners can include, for example, sucrose, fructose, dextrose, maltose, dextrin, levulose, tagatose, galactose, corn syrup solids and other natural or artificial sweeteners. Sugarless sweeteners can include, but are not limited to, sugar alcohols such as maltitol, xylitol, sorbitol, erythritol, mannitol, isomalt, lactitol, hydrogenated starch hydrolysates, and the like, alone or in combination. Usage level of the flavors, sweeteners and colorants will vary greatly and will depend on such factors as potency of the sweetener, desired sweetness of the product, level and type of flavor used and cost considerations. Combinations of sugar and/or sugarless sweeteners may be used.

In a preferred embodiment of the frozen confectionery product the at least one gel coating comprises 25 to 45 % wt of sweetener, preferably from 30 to 43 % wt. Advantageously, the sweetener is sucrose or glucose syrup or a combination thereof. In a further preferred embodiment of the invention, the sweetener consists of 15% wt sugar and 18% wt glucose syrup.

A gelling system which has been found to give a good flexible gel while giving sufficient syneresis to generate frozen liquid on the surface of the gel comprises konjac and carrageenan in a ratio which is in the range from 3:7 to 7:3, more preferably the ratio is 1:1. This system thus allows an easy peeling of the gel coating(s) from the core or from other gel coatings. The preferred konjac is konjac gum. The preferred carrageenan is kappa carrageenan.

A preferred recipe for a gel coating comprising konjac gel consists of 15-25% sugar, 10-20% glucose syrup, 0.2-0.6% konjac, 0.2-0.6% kappa-carrageenan (preferably konjac and kappa-carrageenan at the ratio of 1:1), 0.02-0.5% Potassium Chloride, 0.1-0.4% Monosodium Phosphate, 0.2-0.6% Citric acid, flavors and colors.

Alternatively, according to the invention other gel recipes may be used which are formulated such that sufficient syneresis results in the presence of frozen liquid on the surface of the gel when frozen.

The frozen confectionery product according to the invention comprises one or more additional gel coating(s) on top of or beneath the gel coating, which additional gel coatings at least partly overlaps with the other gel coating. In this embodiment it is preferred that either all the gel coating comprises a gelling system which presents syneresis or every second gel coating comprises such a gel. This allows for an easy peeling of the gel coatings from each other. For example, a frozen confectionery product according to the invention comprises an inner of the gel coating and/or an outer gel coating has/have a layer of frozen liquid on the surface originating from syneresis of the gel(s).

In an embodiment where the frozen confection has more than one gel coating each gel coating may be pulled off separately due to the easy separation of the gel layers resulting from frozen liquid between the gel coatings.

The frozen confection product according to the invention may be provided with at least one cutting line allowing peeling off the gel-coating at least partially. The cutting line does not necessarily have to extend through the complete gel coating. In particular, according to one embodiment of the invention, it is possible that the depth of the cutting line or lines corresponds to the thickness of an outer gel layer. In this case, the gel coating can be peeled off partially, i.e. only the outer gel layer can be peeled off, while the inner gel layer, which is not provided with any cutting lines, remains intact. If the frozen confection product is not provided with cutting lines the gel coating may be pulled away from the core, torn apart and then peeled off.

According to a preferred embodiment of the invention, several cutting lines extending longitudinally across the gel coating are provided, so that the coating can be peeled off by pulling down stripes, similar to peeling a banana. As mentioned above, it is possible that all of the layers constituting the coating or only an outer layer or several outer layers are peeled off.

Alternatively, the cutting line can extend spirally over the gel layer, thus allowing to peel-off the gel-layer in a continuous spiral. A spiral peel, wherein the complete gel layer can be peeled off in one piece, has an interesting play-value and renders the product very attractive.

In one embodiment, the frozen confectionery product may comprise a core consisting of a frozen flexible edible gel at least partially coated with a frozen flexible edible gel coating, the gel coating comprising one or more gel coatings, wherein at least the gel core or one of the gel coating has a layer of frozen liquid on the surface of the gel coating that originates from syneresis of the gel.

According to a preferred embodiment of the invention, the product comprises a holder stick having an upper portion which is inserted into the core. This allows easy handling and consumption. The consumer can hold the stick with one hand, and peel off the gel layer with the other hand or using the teeth. Alternatively it is also possible to make products without a stick, for example in a dome shape or in a shape imitating the shape of a fruit such as an apple or a pear. These products can then be consumed as a dessert using a plate and a spoon.

According to a preferred embodiment of the invention, the gel layer comprises one or more gelling hydrocolloids, in particular a polyanionic gelling hydrocolloid. This leads to the desired consistency and peelablity. Gelling properties can be achieved by various stabilisers and combinations thereof. An overview of stabilisers used in ice cream and indications on its gelling properties can be found in literature such as "Ice Cream, Sixth Edition, R.T. Marshall, H. D. Goff, R.W. Hartel eds., Kluwer Academic/Plenum Publishers, 2003. Optionally the gel layer can comprise a gelation controller or inhibitor. This reduces the texture degradation that normally occurs when a gel is stored hot in its liquid state for a longer time, or when it is cooled down and then reheated.

Each gel layer has a thickness of between 2 and 5 mm. A gel layer which is too thin makes the peeling difficult, since the gel layer may rupture. A gel layer which is too thick is not desirable as it is more difficult to peel, and because of the relatively high sugar content of the gel which has a negative impact on the nutritional characteristics of the product.

It should also be noted that the gel layer does not have to cover the core completely, but may cover only a part or parts of the product. In the case of a spiral cutting line, the cutting line preferably has an inclination of between 3° and 60°, preferably between 5° and 25°, with respect to a plane extending perpendicularly to the symmetry axis of the spiral. In the case where the product comprises a stick, this axis corresponds to the axis of the inserted stick. The cutting line can either be straight to form a simple spiral or ondulated. There may be several such cutting lines, e.g. two cutting lines extending spirally forming a double helix.

In a further embodiment of the invention the cutting line does not extend through the complete gel coating. In particular, it is possible that the depth of the cutting line or lines corresponds to the thickness of an outer gel coating. In this case, the gel coating can be peeled off partially, i.e. only the outer gel coating can be peeled off, while the inner gel layer, which is not provided with any cutting lines, remains intact.

In another embodiment, the cutting line forms a window-like cut-out. Such a cut-out can have virtually any shape, e.g. rectangular, circular, oval, heart-shaped or star-shaped. If the outer layer of the product consists of a peelable gel coating, then the consumer can peel off the coating covering the cut-out delimited by the cutting line, so that pieces of the gel coating can be peeled off. Instead of peeling off a cut-out, one can also peel-off the coating surrounding a cut-out shape, so that only one or several sticker-like pieces of coating having a specific shape remain. The peeling-off can either be done by the consumer, or already in the factory, so that products with shapes made of a peelable gel coating on an ice cream core can be sold.

When parallel, longitudinal cutting lines are desired, these can be cut into the gel layer using several blades arranged in such a manner that when the product is lowered between these blades and then pulled out, the lines are cut into the gel coating. It should be noted that, although the cutting lines preferably extend through the entire gel coating, so that it can be peeled off entirely, they can also only cut through an outer gel layer, leaving an inner gel layer intact. This results then in a product where only the outer gel layer can be peeled off, revealing an inner gel layer (having preferably a different color). It is also possible to have different cutting lines in the inner layer that have been cut or created in a previous step.

To cut spiral cutting line into the gel coating, a cutting tool as described in the International Patent Application PCT/CNll/077465 filed on July 22nd, 2011 can be used. The content of this application is herewith incorporated by reference.

The frozen confection forming the core can comprise ice cream, milk ice, water ice, sherbet, sorbet or a gel.

In a desirable design to facilitate the peeling, four longitudinal cutting lines are provided in the gel layer, so that four flaps of peel can be peeled off. One thereby achieves a banana-style peeling effect. The number of flaps may vary e.g. being 3 to 5 or more for different product designs.

In an alternative version the invention relates to a frozen confectionery product comprising a core of a gel, which is at least partially coated with a gel coating, characterized in that the gel core has a layer of frozen liquid on its surface that originates from syneresis of the gel. In this version of the invention the inner gel coating may be with or without a layer of frozen liquid on its surface originating from syneresis. Furthermore, the above-mentioned preferred embodiments of the invention also apply to this version of the invention.

A preferred method for manufacturing a frozen confectionery, comprising the following steps:
- filling a first jelly mix into a mould, freezing the jelly mix so that it forms a first frozen gel coating in the mould and sucking off the unfrozen jelly mix,
- filling a second jelly mix into a mould, freezing the jelly mix so that it forms a second frozen gel coating in the mould and sucking off the unfrozen mix,
thereby obtaining a shell consisting of two frozen gel coatings,
- filling a third mix forming the core consisting of a frozen confection into said shell,
- freezing and de-moulding the product,
   - wherein at least one of the the gel coating has a layer of frozen liquid on the surface of the gel coating that originates from syneresis of the gel.

Alternatively, the frozen confectionery product may be produced by extruding the core and then the adding gel coating(s) done by dipping or spraying.

### EXAMPLES

By way of example and not limitation, the following examples are illustrative of various embodiments of the present disclosure.

Only the frozen confectionery products comprising the ingredients in the ranges specified in the claims are part of the invention.

### Example 1 - Peelablility of double gel coating made from different combination of gel coatings.

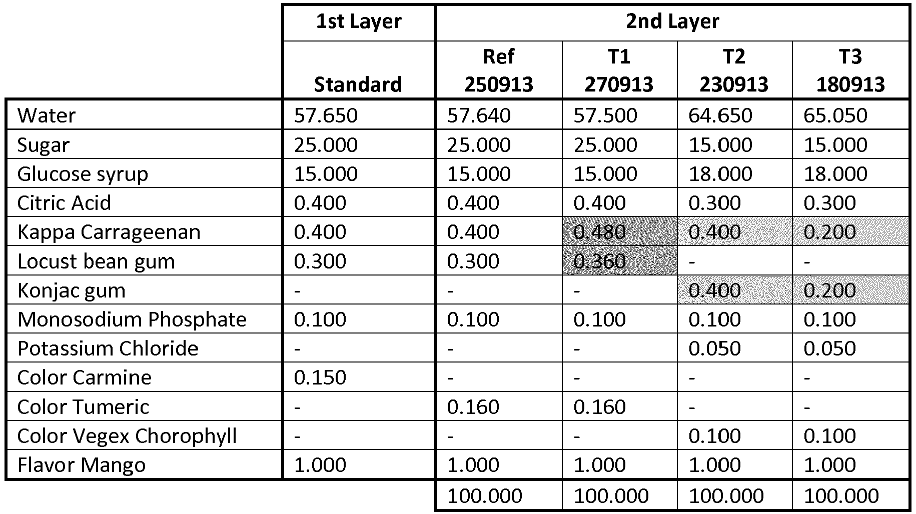

In this example 4 samples of double gel coating peelable stick were made to compare the peelability of the 2 gel layers. In the present context a standard gel means the gel made with the existing gel system used for peelable stick. The gelling system comprises Carrageenan-LBG system. The external gel coating for all the samples are standard jelly and the inner gel coatings are as follows:
"Ref": is the standard gel coating
"T1": A standard gel coating with 20% increased of total stabilizers compared to standard gel recipe used in the standard gel coating.
"T2": A gel coating comprising konjac-carrageenan.
"T3": A gel coating comprising konjac-carrageenan with total stabilizer level less than T2.

The konjac gum was obtained from a Chinese supplier named Hubei Konson Konjac Gum Co. Ltd. The grade KC-30 is used. The samples were prepared as follows:

### Mix preparation for standard gel mix:

A pre-blend of the stabilizers and sugar at 1:4 ratio was used. The water was heat up to 80-85 °C, and the ingredients dosed in the following sequence:
i) Glucose Syrup
ii) Pre-blended stabilizers and salts
iii) Sugar

The ingredients were mixing at 80-85 °C for 20-25 minutes. Then cooled down to 40-45 °C (for standard gel) and to 45-50 °C (for konjac gel). The flavors, colors and acids were then added in.

The double coated peelable gel stick was made as follows:
1. The standard jelly mix was filled into a mould and frozen in mould so that it forms the gel layer in the mould. Unfrozen mix was sucked out to obtain the first frozen gel layer.
2. Then the jelly mix to be used to form the 2^{nd} layer (Ref, T1, T2 & T3) was filled respectively into the mould containing the first frozen gel layer and frozen. Unfrozen jelly mix sucked out to obtain the second frozen gel layer in the first gel layer.
3. Ice cream mix was filled into the mould containing the first and second gel layer and frozen to form the core.
4. A wooden stick was placed into the product.
5. De-moulding of the product took place when the entire product was frozen.
6. 4 cutting lines were made on the product with the cutting tool.
7. The depth of the cutting lines was the same as the total thickness of the first and second gel layers.

All the samples were subjected to 3 days heat shock procedures as indicated below before evaluation. Heat shock procedures:
The samples were placed into freezer cabinet set at -20 oC, which is automatically switched on for 22.5 hours and then switched off for 2.5 hours in order to provoke a thermal shock. This procedures were repeated for 3 days.

Samples were tempered in freezer cabinet (-17.5 to -18.4 °C) before evaluation. They were marked with H to indicate that they had been subjected to a heat shock cycles.

| Control | Ref | T1 | T2 | T3 |
|---|---|---|---|---|
| Heat Shock Samples | HRef | HT1 | HT2 | HT3 |

The samples prepared as mentioned above are shown in the following figures:

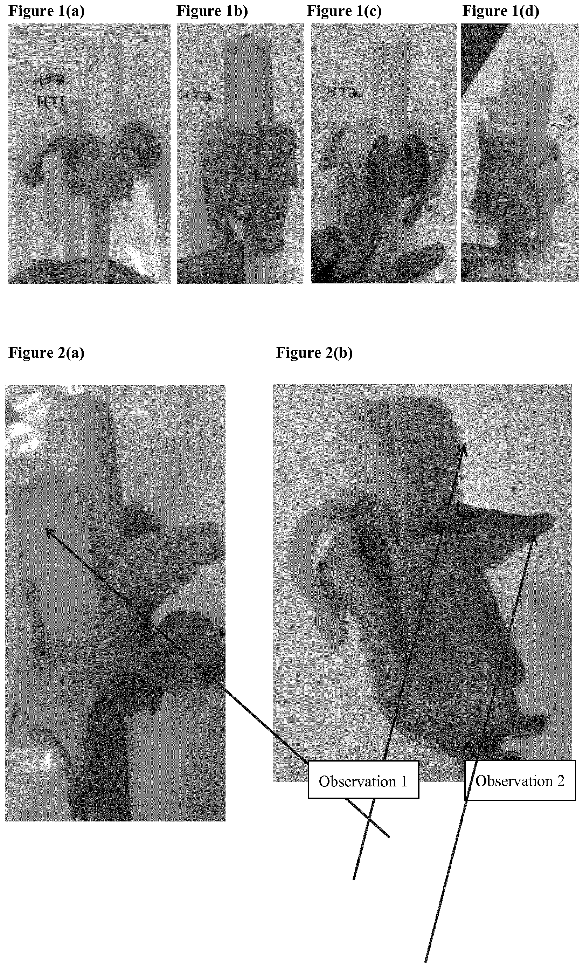

Figure 1(a) shows sample HT1 with the gel coatings peeled off
Figure 1(b) shows sample HT2 with the outer standard gel layer peeled off.
Figure 1(c) shows sample HT2 with both the inner and the outer gel layer peeled off.
Figure 1(d) shows sample HT3 with the outer layer peeled off.

Observations from analyzing the samples:
Samples Ref and T1: The samples showed the same peelability. The gel layers were found to be adhering although and it was possible but more difficult to be separated The separation was found easier at a warmer temperature.
Sample T2: 1st and 2nd gel layer could be separated easily, and it was possible to peel off the inner layer from the core easily and the inner gel coating did not show any tendency to break when being peeled off from the core. This sample was the sample that had the best peelability compared to the rest of the samples.
Sample T3: 1st and 2nd layer can be separated better than Ref and T1, the inner coating can be peeled off but is easily broken during peeling and could not be peeled intact nicely

### Detailed analysis of Sample T2:

Reference is here made to Figure 2(a) and (b). Observations from analyzing the samples:
1. A thin ice layer of frozen liquid can be observed on the surface of konjac-carrageenan gel coating.
2. Bending or turning of the inner gel layer will lead to the cracks in the thin ice layer.
3. This thin ice layer has been found to enable an easy separation of 2 gel coatings.
4. The formation of this thin ice layer has been found to be is due to the syneresis of konjac-carrageenan gel coating.

Furthermore, some ice crystals were also found on the surface of the external jelly layer, this is mostly the frost formed from the moisture in the air. The profile of the ice crystal formed on the surface of the external jelly layer was found different from the thin ice layer formed on the surface of the inner layer (konjac-carrageenan gel coating) in observation 1.

### Example 2 - Effect of total solid content in gel recipe

Samples were prepared from the following ingredient list:

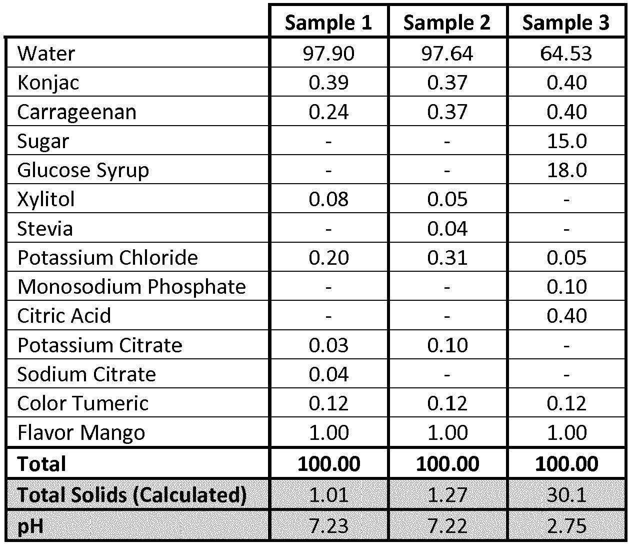

Samples were made into peelable stick with one gel coating to compare the texture of the jelly under frozen condition and the peelability. The process in example 1 was followed but only with one gel coating was made. The samples prepared are shown in the figures as follows:

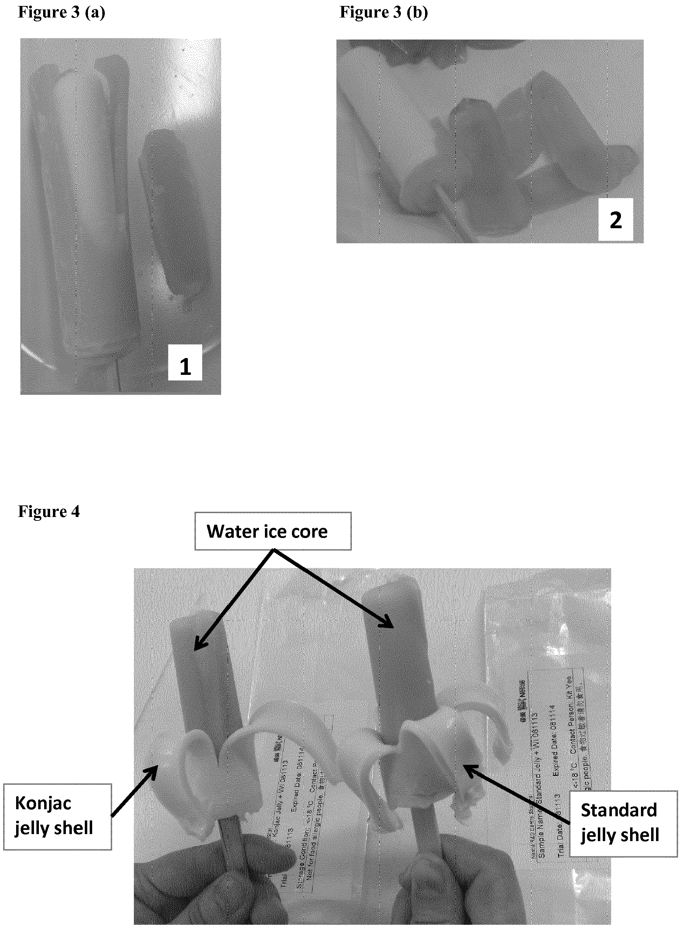

Figure 3 (a) and (b) show samples 1 and 2 - frozen confection with a gel coating having a low total solid content.

Observations from analyzing the samples 1 and 2:
1) For sample 1 and 2 the jelly sets with typical konjac jelly texture at ambient/chilled condition (chewy)
2) When it was made into "peelable jelly stick", the gel coating was frozen like a "water ice shell". When this frozen gel coating was cut to form cutting lines, it cracks like a hard water ice shell.
3) The konjac gel frozen confection prepared according to the recipe of sample 1 and 2 did not show any peelability attribute at frozen state.
4) After the ice melted, the flexible jelly texture comes back

Sample 3 had similar behavior as the samples shown in Example 1.

### Example 3 - Peelability of gel coatings on water ice

The preparation method described in Example 1 was applied. Recipes for standard gel coating and konjac gel coating:

| | **Standard Jelly** | **Konjac Jelly** |
|---|---|---|
| Water | 57.650 | 64.650 |
| Sugar | 25.000 | 15.000 |
| Glucose syrup | 15.000 | 18.000 |
| Citric Acid | 0.400 | 0.300 |
| Carrageenan | 0.400 | 0.400 |
| Locust bean gum | 0.300 | - |
| Konjac | - | 0.400 |
| Monosodium Phosphate | 0.100 | 0.100 |
| Potassium Chloride | - | 0.050 |
| Color Carmine | 0.150 | - |
| Color Tumeric | - | - |
| Color Vegex Chorophyll | - | 0.100 |
| Flavor Mango | 1.000 | 1.000 |
| | **100.000** | **100.000** |

**Recipe for water ice core:**

| | % |
|---|---|
| Water | 81.34 |
| Sugar | 17.00 |
| Glucose syrup | 1.00 |
| Citric Acid | 0.40 |
| Guar gum | 0.10 |
| Flavor Pineapple | 0.10 |
| Vegex Chorophyll Color | 0.06 |
| | **100.000** |

Two peelable stick samples were made with the outer shell made from a standard gel coating and a konjac gel coating recipe in the table. Both samples were with a water ice core according to the recipe in this example. The samples are shown in Figure 4.

### Observations from analyzing the samples:

Both konjac gel coating and standard gel coating were peelable from the water ice core. The konjac gel coating showed an improved peelability over the standard and the gel texture was slightly harder.

## Claims

1. A frozen confectionery product comprising a core of a frozen confection, which is at least partially coated with a gel coating, **characterized in that** the gel coating has a layer of frozen liquid on the surface of the gel coating that originates from syneresis of the gel, and wherein the gel coating has a total solid content from 20 to 45% based on weight of the gel (wt) and comprises 0.2 to 2 % wt of a gelling agent and konjac, in an amount from 0.1 to 1.0% wt. and wherein the at least one gel layer comprises konjac and carrageenan in a ratio which is in the range from 3:7 to 7:3, and wherein the gel coating or gel coatings has/have a thickness of between 2 and 5 mm, and wherein the frozen confectionery product comprises one or more additional gel coating(s) on top of or beneath the gel coating, which additional gel coatings at least partly overlaps the other gel coating.

2. A frozen confectionery product according to any of the preceding claims, wherein the gel coating(s) comprises 20 to 45 % wt of sweetener.

3. A frozen confectionery product according claim 1, wherein the at least one gel layer comprises konjac and carrageenan ratio is 1:1.

4. A frozen confectionery product according to any of the preceding claims wherein an inner of the gel coating and/or an outer gel coating has/have a layer of frozen liquid on the surface originating from syneresis of the gel(s).

5. A frozen confectionery product according to any of the preceding claims, wherein one or more or the gel coatings being provided with at least one cutting line allowing peeling-off the gel-coating at least partially.

6. Frozen confectionery Product according to any of the preceding claims, comprising a holder stick having an upper portion which is inserted into the core.

7. Frozen confectionery product according to any of the preceding claims, wherein the gel coating or gel coatings has/have several cutting lines extending longitudinally across gel coating(s), allowing the coating(s) to be peeled off in substantially parallel stripes.

8. Frozen Confectionery Product according to any of claims 1 to 7, wherein the cutting line extends spirally across the gel coating to be peeled off in a spiral.

9. Frozen confectionery product according to any of the preceding claims, wherein the frozen confection forming the core comprises ice cream, milk ice, water ice, sherbet, sorbet or gel.

10. Method for manufacturing a frozen confectionery product according to any of the preceding claims, comprising the following steps:
- filling a first jelly mix into a mould, freezing the jelly mix so that it forms a first frozen gel coating in the mould and sucking off the unfrozen jelly mix,
- filling a second jelly mix into a mould, freezing the jelly mix so that it forms a second frozen gel coating in the mould and sucking off the unfrozen jelly mix,
thereby obtaining a shell consisting of two frozen gel coatings,
- filling a third mix forming the core consisting of a frozen confection into said shell,
- freezing and de-moulding the product,
- wherein at least one of the the gel coating has a layer of frozen liquid on the surface of the gel coating that originates from syneresis of the gel.

## Patentansprüche

1. Gefrorenes Süßwarenprodukt, umfassend einen Kern aus einer gefrorenen Süßware, die mindestens teilweise mit einem Gelüberzug beschichtet ist, **dadurch gekennzeichnet, dass** der Gelüberzug eine Schicht aus gefrorener Flüssigkeit auf der Oberfläche des Gelüberzugs aufweist, die aus der Synärese des Gels entstammt, und wobei der Gelüberzug einen Gesamtfeststoffgehalt von 20 bis 45 Gew.-% basierend auf dem Gewicht des Gels aufweist und zu 0,2 bis 2 Gew.-% ein Geliermittel und Konjak umfasst, in einer Menge von 0,1 bis 1,0 Gew.-%, und wobei die mindestens eine Gelschicht Konjak und Carrageen in einem Verhältnis umfasst, das
in dem Bereich von 3:7 bis 7:3 liegt, und wobei der Gelüberzug oder die Gelüberzüge
eine Dicke von 2 bis 5 mm aufweist bzw. aufweisen, und wobei das gefrorene Süßwarenprodukt einen oder mehrere zusätzliche Gelüberzüge auf oder unter dem Gelüberzug umfasst, wobei die zusätzlichen Gelüberzüge den anderen Gelüberzug mindestens teilweise überlappen.

2. Gefrorenes Süßwarenprodukt nach einem der vorstehenden Ansprüche, wobei der Gelüberzug bzw. die Gelüberzüge zu 20 bis 45 Gew.-% Süßungsmittel umfassen.

3. Gefrorenes Süßwarenprodukt nach Anspruch 1, wobei der mindestens eine Gelüberzug Konjak umfasst und das Carrageen-Verhältnis 1:1 beträgt.

4. Gefrorenes Süßwarenprodukt nach einem der vorstehenden Ansprüche, wobei ein Inneres des Gelüberzugs und/oder ein äußerer Gelüberzug eine Schicht aus gefrorener Flüssigkeit auf der Oberfläche aufweist bzw. aufweisen, die aus der Synärese des Gels bzw. der Gele entstammt.

5. Gefrorenes Süßwarenprodukt nach einem der vorstehenden Ansprüche, wobei ein oder mehrere oder die Gelüberzüge mit mindestens einer Schnittlinie versehen sind, die das Abziehen des Gelüberzugs mindestens teilweise ermöglicht.

6. Gefrorenes Süßwarenprodukt nach einem der vorstehenden Ansprüche, das einen Haltestab mit einem oberen Abschnitt umfasst, der in den Kern eingesetzt ist.

7. Gefrorenes Süßwarenprodukt nach einem der vorstehenden Ansprüche, wobei der Gelüberzug oder die Gelüberzüge mehrere Schnittlinien aufweist bzw. aufweisen, die sich in Längsrichtung über den Gelüberzug bzw. die Gelüberzüge erstrecken, die ermöglichen, dass der Überzug bzw. die Überzüge in im Wesentlichen parallelen Streifen abgezogen werden können.

8. Gefrorenes Süßwarenprodukt nach einem der Ansprüche 1 bis 7, wobei sich die Schnittlinie spiralförmig über den abzulösenden Gelüberzug erstreckt, um in einer Spirale abgezogen zu werden.

9. Gefrorenes Süßwarenprodukt nach einem der vorstehenden Ansprüche, wobei die gefrorene Süßware, die den Kern bildet, Eiscreme, Milcheis, Wassereis, Fruchteis oder Sorbet oder Gel umfasst.

10. Verfahren zur Herstellung eines gefrorenen Süßwarenprodukts nach einem der vorstehenden Ansprüche, umfassend die folgenden Schritte:
- das Einfüllen einer ersten Gelee-Mischung in eine Form, das Einfrieren der Gelee-Mischung, so dass sie in der Form einen ersten gefrorenen Gelüberzug bildet, und das Absaugen der ungefrorenen Gelee-Mischung,
- das Einfüllen einer zweiten Gelee-Mischung in die Form, das Einfrieren der Gelee-Mischung, so dass sie in der Form einen zweiten gefrorenen Gelüberzug bildet, und das Absaugen der ungefrorenen Gelee-Mischung, wodurch eine Hülle, bestehend aus zwei gefrorenen Gelüberzügen, erhalten wird,
- das Einfüllen einer dritten Mischung, die den Kern bildet, bestehend aus einer gefrorenen Süßware in der Hülle,
- das Einfrieren und Entformen des Produkts,
- wobei mindestens einer der Gelüberzüge eine Schicht aus gefrorener Flüssigkeit auf der Oberfläche des Gelüberzugs aufweist, die aus der Synärese des Gels entstammt.

## Revendications

1. Produit de confiserie congelé comprenant un cœur d'une confiserie congelée, qui est au moins partiellement enrobé d'un enrobage de gel, **caractérisé en ce que** l'enrobage de gel a une couche de liquide congelé sur la surface de l'enrobage de gel d'enrobage qui résulte de la synérèse du gel, et dans lequel l'enrobage de gel a une teneur totale en solides de 20 à 45 % par rapport au poids du gel (en poids) et comprend 0,2 à 2 % en poids d'un agent gélifiant et de konjac, en une quantité de 0,1 à 1,0 % en poids et dans lequel l'au moins une couche de gel comprend du konjac et du carraghénane dans un rapport qui se situe dans la plage de 3:7 à 7:3, et dans lequel l'enrobage de gel ou les enrobages de gel a/ont une épaisseur entre 2 et 5 mm, et le produit de confiserie congelé comprenant un ou plusieurs enrobages de gel supplémentaires au-dessus ou en-dessous de l'enrobage de gel, lesquels enrobages de gel supplémentaires recouvrent au moins partiellement l'autre enrobage de gel.

2. Produit de confiserie congelé selon l'une quelconque des revendications précédentes, dans lequel le ou les enrobages de gel comprennent 20 à 45 % en poids d'édulcorant.

3. Produit de confiserie congelé selon la revendication 1, dans lequel l'au moins une couche de gel comprend un rapport de konjac à carraghénane de 1:1.

4. Produit de confiserie congelé selon l'une quelconque des revendications précédentes dans lequel un intérieur de l'enrobage de gel et/ou un enrobage de gel externe a/ont une couche de liquide congelé sur la surface résultant de la synérèse du ou des gels.

5. Produit de confiserie congelé selon l'une quelconque des revendications précédentes, dans lequel un ou plusieurs ou les enrobages de gel sont pourvus d'au moins une ligne de coupe permettant à l'enrobage de gel d'être au moins partiellement pelable.

6. Produit de confiserie congelé selon l'une quelconque des revendications précédentes, comprenant un bâtonnet de support ayant une partie supérieure qui est insérée dans le cœur.

7. Produit de confiserie congelé selon l'une quelconque des revendications précédentes, dans lequel l'enrobage de gel ou les enrobages de gel a/ont plusieurs lignes de coupe s'étendant longitudinalement à travers le ou les enrobages de gel, permettant à l'enrobage ou aux enrobages d'être pelés en bandes sensiblement parallèles.

8. Produit de confiserie congelé selon l'une quelconque des revendications 1 à 7, dans lequel la ligne de coupe s'étend en spirale à travers l'enrobage de gel pour être pelé en spirale.

9. Produit de confiserie congelé selon l'une quelconque des revendications précédentes, dans lequel la confiserie congelée formant le cœur comprend de la crème glacée, de la glace au lait, de la glace à l'eau, du sorbet laitier, du sorbet ou du gel.

10. Procédé de fabrication d'un produit de confiserie congelé selon l'une quelconque des revendications précédentes, comprenant les étapes suivantes :
- remplissage d'une première préparation pour gelée dans un moule, congélation de la préparation pour gelée de sorte qu'elle forme un premier enrobage de gel congelé dans le moule et aspiration de la préparation pour gelée non congelée,
- remplissage d'une deuxième préparation pour gelée dans un moule, congélation de la préparation pour gelée de sorte qu'elle forme un deuxième enrobage de gel congelé dans le moule et aspiration de la préparation pour gelée non congelée, obtenant ainsi une coque constituée de deux enrobages de gel congelé,
- remplissage d'une troisième préparation formant le cœur constituée d'une confiserie congelée dans ladite coque,
- congélation et démoulage du produit,
- au moins l'un des enrobages de gel ayant une couche de liquide congelé sur la surface de l'enrobage de gel qui résulte de la synérèse du gel.
